# EUROPEAN PATENT SPECIFICATION

(11) **EP 4 012 457 B1**
(45) Date of publication and mention of the grant of the patent: **14.06.2023**
(21) Application number: 21165145.0
(22) Date of filing: 26.03.2021
(51) Int. Cl.: G01T 1/16, G01T 1/02, G01T 1/38, G01N 22/00

(54) **HYBRID MULTI-LAYER SENSOR AND METHOD FOR LARGE FLUENCE DOSIMETRY AND FLUXMETRY**
HYBRIDER MEHRSCHICHTSENSOR UND VERFAHREN ZUR HOCHFLUENZDOSIMETRIE UND FLUSSMESSUNG
CAPTEUR HYBRIDE MULTICOUCHE ET PROCÉDÉ DE DOSIMÉTRIE ET DE FLUXMÉTRIE À GRANDE FLUENCE

(30) Priority: 10.12.2020 LT 2020562
(43) Date of publication of application: 15.06.2022
(73) Proprietor: Vilnius University, 01513 Vilnius (LT)
(72) Inventor: Gaubas, Eugenijus, 06203 Vilnius (LT); Ceponis, Tomas, 04116 Vilnius (LT); Deveikis, Laimonas, 10316 Vilnius (LT); Pavlov, Jevgenij, 06294 Vilnius (LT); Rumbauskas, Vytautas, 10230 Vilnius (LT)
(74) Representative: Klimaitiene, Otilija

(56) References cited:
- GAUBAS E ET AL: "Carrier decay and luminescence characteristics in hadron irradiated MOCVD GaN", JOURNAL OF INSTRUMENTATION, INSTITUTE OF PHYSICS PUBLISHING, BRISTOL, GB, vol. 9, no. 12, 19 December 2014 (2014-12-19), XP020275344, ISSN: 1748-0221, DOI: 10.1088/1748-0221/9/12/C12044 [retrieved on 2014-12-19]
- GAUBAS E ET AL: "variations of proton-induced luminescence in ZnSe crystals", JOURNAL OF PHYSICS D: APPLIED PHYSICS, INSTITUTE OF PHYSICS PUBLISHING LTD, GB, vol. 47, no. 26, 10 June 2014 (2014-06-10) , page 265102, XP020266384, ISSN: 0022-3727, DOI: 10.1088/0022-3727/47/26/265102 [retrieved on 2014-06-10]

## Description

### FIELD OF INVENTION

This invention relates to dosimetry and fluxmetry of high energy electromagnetic and particle radiations. More specifically, it discloses a hybrid multi-layer sensor and method for large fluence dosimetry and fluxmetry using this sensor.

### BACKGROUND ART OF INVENTION

Examples of hybrid sensors for dosimetry and fluxmetry of high fluence irradiations by large energy particles are **Phoswich** ("phosphor sandwich") detector systems or hybrid detectors of X-ray imaging.

The Phoswich detectors typically are used to detect low-intensity and low-energy gamma-rays, as well as X-rays together with alpha and beta particles in a higher-energy ambient background. Some detector designs can measure and separately identify the incident radiation energies simultaneously. The Phoswich is a combination of scintillators (for instance, three layers of scintillator material of different luminescence decay time described in scientific literature, e. g., [1]), with dissimilar pulse shape characteristics optically coupled to each other and to a common photomultiplier (PMT). Pulse shape or spectral analysis of the large statistical ensemble distinguishes the (PSD - pulse shape or SSD- spectral shape discriminator) signals from a sequence of the stochastic scintillation events generated by ionizing radiation within the Phoswich layers, sometimes identifying in which scintillator the event occurred. However, the rather long exposures are necessary to collect the reliable ensembles of stochastic events and to separate the PSD/SSD parameters of the incident particles. On the other hand, high sensitivity of PMT's leads to complete saturation effects of the PMT signals under rather high-intensity scintillation due to large flux/large fluence irradiation fields, thereby rejecting the possibility to identify the incident particles and to separate their (particle energy, density, etc.) parameters. The rather low-energy of gamma-X-rays and particles (alpha, beta, protons, pions) can be detected using the Phoswich detectors, due to thin scintillators exploited to get an efficient excitation (within short stopping range) and luminescence light collection (to avoid the re-absorption effects), thereby the Phoswich detectors are hardly applicable for identification/separation of the penetrative (large energy) particles. The tight binding of several thin scintillators and other technological means are necessary in the fabrication of the luminescent component of the Phoswich detector to avoid the interference and secondary excitation effects within a combination of several scintillators, which is hardly possible when using a simple agglutination technique in the formation of the layered scintillator and the same PMT for registering of the optical responses, especially for the cases of the enhanced intensity of irradiations.

Several examples of Phoswich detectors are described in research papers [1], [2] and patent documents. The Japanese patent JPH06123777A discloses a Phoswitch detector with an optical filter for controlling peak value and rising time of output pulse from scintillators to govern the scintillator signals and to suppress the transmittance of fluorescent light emitted from the scintillator or to trap the fluorescent light.

Another Phoswich-type hybrid system for remote sensing of external dosimetry is disclosed in the US patent US7566881B2 "DIAL-Phoswich hybrid system for remote sensing of radioactive plumes in order to evaluate external dose rate", where an interactive combination of Phoswich detector array and differential absorption lidar is proposed to trace an unknown dose of the radioactive source.

An alternative to Phoswich detectors is the Hybrid Pixel detectors employed for dosimetry and fluxmetry of radiation. **Hybrid pixel detector** (HPD) is a type of ionizing radiation detector consisting of an array of semiconductor diodes and their associated electronics. The term "hybrid" stems from the fact that the two main elements from which these devices are built - the semiconductor sensor and the readout chip - are manufactured independently, and later electrically coupled by means of a bump-bonding process. Ionizing particles are detected as they produce electron-hole pairs through their interaction with the sensor elements, usually made either of doped silicon or cadmium telluride. The readout element is segmented into pixels containing the necessary electronics to amplify and measure the electrical signals induced by the incoming particles in the sensor layer. Hybrid pixel detectors may also operate in the single-photon mode, known as **Hybrid Photon Counting Detectors** (HPCDs). The latter detectors are designed to count the number of hits within a certain time interval. They have become as a standard in most synchrotron light sources and X-ray detection applications. However, hybrid pixel detectors when operating in the dosimeter regime are rapidly damaged by irradiation, and its response should be permanently re-calibrated to get reliable results. Moreover, the HPDs are rather expensive devices, thus making the large fluence dosimetry the non-reversible and expensive procedure.

Examples of Hybrid Pixel detectors are described in research papers [3], [4]. From patents and patent applications, close to the present invention is the method and apparatus are described in the US patent US7388206B2 "*Pulse shape discrimination method and apparatus for high-sensitivity radioisotope identification with an integrated neutron-gamma radiation detector*" where for discriminating the types of radiation, interacting with an integrated radiation detector having of a pulse-mode operating photosensor which is optically coupled to a gamma-ray scintillator sensor and a neutron scintillator sensor, and uses an analog to digital converter (ADC) and a charge to digital converter (QDC) to determine scintillation decay times and classify radiation interactions by radiation type.

Another similar detector for simultaneous recording of several types of radiations (simultaneous beta and gamma spectroscopy) is disclosed in the US patent US7683334B2, where three layered-scintillators are used for beta and gamma detection. A pulse induced by an interaction of the radiation with the detector is analysed to classify the type of event as beta, gamma, or unknown. A pulse is classified as a beta-event if the pulse originated from just the first scintillator alone or from just the first and the second scintillator. A pulse from just the third scintillator is recorded as gamma-event.

The main drawback of the above reviewed Phoswich and HPD sensors is that they are suitable to measure radiations of low intensities and low fluences. However, for higher flux radiation and, especially, in harsh environments (such as nuclear reactors, particle accelerators, etc.) Phoswich and HPD sensors saturate quickly, or fail to operate due to impacts of high irradiation, or are unable to discriminate needed species of radiations and particles.

Gaubas et al, "Carrier decay and luminescence characteristics in hadron irradiated MOCVD GaN", JOURNAL OF INSTRUMENTATION, INSTITUTE OF PHYSICS PUBLISHING, BRISTOL, GB, vol. 9, no. 12, 19 December 2014, shows determination of both luminescence spectra and microwave transient photoconductivity. A single layer is used to determine both luminescence spectra and carrier lifetime changes.

### SUMMARY OF INVENTION

The present hybrid multi-layered sensor for the large fluence dosimetry and fluxmetry contains layers of the scintillator sensors and a photosensor operating in the pulse-mode as well as in DC-operating mode. Differently from the closest prior art document US7683334B2, in the present sensor the multi-layered scintillator is separated from the photosensor by the filter of visible EM spectrum which is made of large conductivity Silicon (Si) layer, and furthermore, the scintillator and photosensor are separately scanned by at least two external apparatuses - the fiber-coupled spectrophotometer and the microwave needle-tip antenna connected to a microwave detection system, where particle species and the particle energy discrimination is performed by correlating signals of the scintillator spectrum structure and the microwave probed photoconductivity amplitude and decay lifetime, and where the multi-layered scintillator and photosensor act as the complementary detectors for the same flux of the radiation.

This hybrid multi-layer sensor is intended for contactless dosimetry and fluxmetry in the monitoring of the harsh radiation facilities and control of mixed particle beams in nuclear reactors, in storages of nuclear fuel waste, in large particle accelerators and neutron spallators which also is supplied by the reading apparatuses and measurement methods.

### DESCRIPTION OF DRAWINGS

The drawings are provided as a reference to possible embodiments and are not intended to limit the scope of the invention. Neither of the drawings and the graphs presented herein should be construed as limiting the scope of the invention, but merely as an example of a possible embodiment.

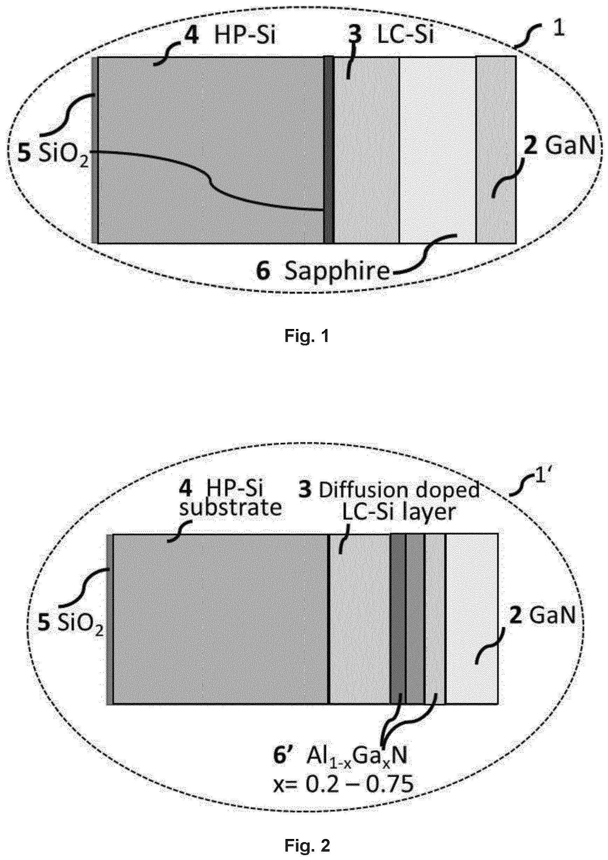

- **Fig. 1**: Hybrid sensor (1) manufactured as a system of the composite detectors through binding of the separately made semiconductor wafer pieces: a depth-scan layer (4) made of the high purity silicon (HP-Si) layer (4) acting as a stopping range scanner or microwave-probed photo-conductor with thermal SiO₂ passivated surfaces (5), and which is bound to the large conductivity silicon (3) layer (LC-Si) addressed to prevent excitation of the HP-Si, and the top-layer (2) as GaN scintillator (2), where the GaN scintillator (2) is separated from the LC-Si by insulator of sapphire type (6). The top-layer (2) as GaN scintillator (2) is also named as the first layer (2) of the hybrid sensor (1), the depth-scan (4) layer is also named as the second layer (4) of the hybrid sensor (1), and the large conductivity silicon (3) layer (LC-Si) is also named as the intermediate layer (3) in between the first layer (2) and the second layer (4);
- **Fig. 2**: Hybrid sensor (1') grown as a single device structure, where on the surface passivated HP-Si substrate (4), the LC-Si (3) is formed by high-density dopant in-diffusion followed by MOCVD growth of the GaN main-scintillator separated from LC-Si by Al₁₋ₓGaₓN alloy of varied x serving as the nucleation and lattice adjustment layers (6'). The latter Al₁₋ₓGaₓN -GaN (6') layers are also suitable to be employed as the scintillator array system;

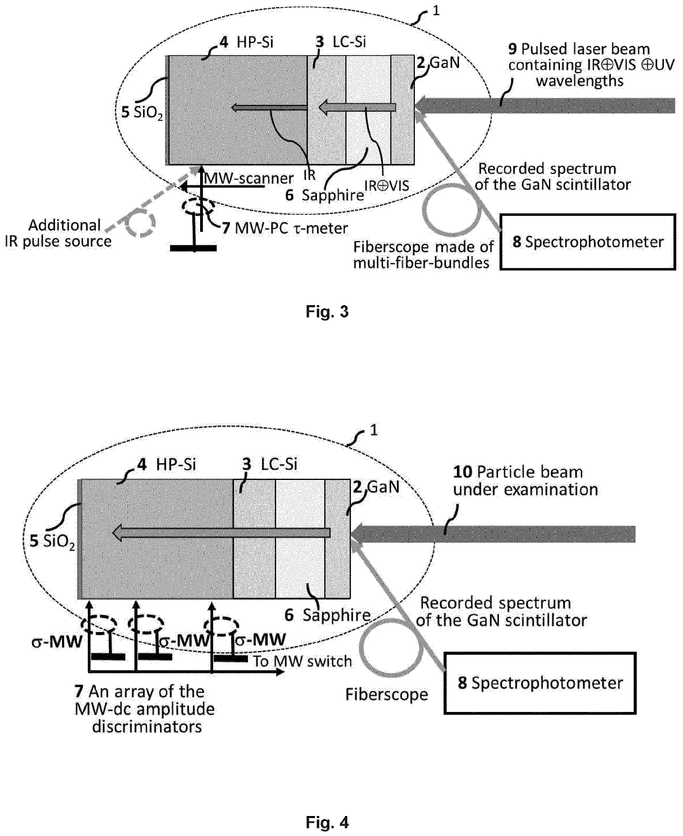

- **Fig. 3**: Reading of the hybrid sensor signals in the dosimeter mode. Here, the reader contains three-wavelength (IR⊕VIS⊕UV) pulse laser (9), a UV beam of which excites luminescence (PL within GaN layer) and PL light is collected by the multi-bundle fiberscope into spectrometer(8), where PL dispersed spectrum is recorded, and an IR beam of which, spectrally separated by LC-Si layer, excites the excess carriers within HP-Si layer, the decay lifetime (*τ*) of which is extracted from microwave probed photoconductivity (MW-PC) transients, recorded at different depths of HP-Si. The MW-PC signals are collected by a needle-tip MW antenna (7), where several scans of the MW-PC-*τ* can be employed or consecutive profiling is implemented, using additional pulsed IR beam, split off the three-wavelength (IR⊕+VIS⊕+UV) laser. The calibrated *τ*- fluence and PL spectral band intensity vs. fluence characteristics are employed to extract the irradiation fluence (*Φ*)/dose (*D*) values;
- **Fig. 4**: Reading of the hybrid sensor dc-signals in the particle identification/fluxmeter mode, where mixed particle steady-state beam impinges on HS scintillator surface exciting particle-induced luminescence incident particle species (*Sᵢ*). Thicknesses of HP-Si layer and an amount of the *σ*-MW probes are selected according to anticipated particle beams under tests;
- **Fig. 5**: Hybrid sensor (1') grown as a single device structure and its reading in time-resolved and particle discrimination mode when analysing pulsed sources of irradiations. The principles of measurements are close to the steady-state beam version (Fig. 4), however, PI-L signals are recorded using spectrum-time resolved spectrograph (8') mode and a light collecting lens-thimble mounted on the multi-bundle fiberscope, while excess carrier pair density calibrated MW-pulse amplitude discriminators (7') are employed for depth-profiling scanners;
- **Fig. 6**: Reader of the single device HS in time-resolved, species discrimination mode with additional arrangement of the charge-state separation. The magnetic analyser (13) of impinging particle charges, entrance aperture (12), and shielding (11), as well as temperature stabilization (14) systems are employed in advanced HS reader;
- **Fig. 7**: Carrier recombination lifetime (15) in the high purity Si as a function of the hadron (pion, proton, and reactor neutron) fluence, calibrated to material damage by 1 MeV neutrons;
- **Fig. 8**: Carrier recombination lifetime in proton irradiated pure -Si as a function (16) of proton fluence and energy;
- **Fig. 9**: Carrier recombination lifetime depth- distribution profile (17) in low-energy, short stopping range proton irradiated pure -Si;
- **Fig. 10**: The carrier trapping lifetime variations (18) in neutron-irradiated and isochronally annealed Si wafer-fragments as a function of neutron irradiation fluence. The appearance of the trapping (asymptotic decay) component implies that hadrons introduce both the extended and point defects. Therefore, thermal ambient should be kept invariable to get reliable results;
- **Fig. 11**: The reciprocal carrier trapping lifetime as a function of 300 MeV gamma-ray dose in differently (as-grown - 19 and oxygenated -20) processed HP-Si wafer fragments;
- **Fig. 12**: Evolution of the proton-induced GaN luminescence spectrum bands (UV - 21, B-22, YG-23) as a function of 1.6 MeV proton fluence;
- **Fig. 13**: The as-recorded GaN scintillator YG-L intensity as a function (24) of the irradiation fluence;
- **Fig. 14**: Variation of the peak intensity ascribed to different luminescence spectral bands (B-25, YG-26, R-27) as a function of irradiation fluence collected during exposure to the 1.6 MeV proton beam;
- **Fig. 15**: Variations of the predominant spectral peaks within time-resolved luminescence (TR-L) spectrum (UV-28, YG-29, B-30) as a function of the reactor neutron irradiation fluence. In the inset, variations TR-L spectra dependent on irradiation fluence are shown;
- **Fig. 16**: The Streak-Camera recorded spectra on the GaN scintillators (lightly - doped- LD (31) and heavily -doped -HD (32) GaN): as-recorded (dots) and fitted (solid lines) using an approach of three Gaussian spectral bands. The simulated components of a luminescence spectrum are illustrated by dot curves n=1, 2, 3;
- **Fig. 17**: Comparison of the TR-L transients recorded on LD (31) and HD (32) GaN scintillators;
- **Fig. 18**: Comparison of the spectral shapes recorded on the same GaN scintillator under irradiation of 18 MeV electrons (33), 1.8 MeV protons (34), and 0.8 MeV gamma-rays (35).

### DETAILED DESCRIPTION OF INVENTION

The present invention relates **to layered combinations in a single sensor (1)** of the microwave-probed photo-sensors made of **high-purity large- resistivity semiconductor** homogeneous bulk-plate (4) **separated by a heavily-doped large-conductivity semiconductor** layer (3), acting as a spectral filter preventing the mutual excitation of the large-resistivity semiconductor layer (4) **by the top layer luminescence created within a thin top layer** (2) **of a scintillator** (**Fig. 1**). The top scintillator layer (2) is designed according to absorption depth in the optical spectral range of the luminescence radiation which is addressed to generate a scintillation spectrum inherent for definite radiation dose, collected within scintillator material when the sensor operates in dosimetry regime. This top scintillator layer (2) generates a combination of spectral shapes, characteristic for different particle radiations when the hybrid sensor (1) operates in fluxmetry/particle species identification regime thereby acting as the spectral shape discriminators. The intensity of luminescence generated by the top scintillator layer (2) is adjusted to be proportional to the density of either the incident high energy particles or UV radiation intensity when a laser beam is employed as a spectral reader for scintillator which had collected a definite fluence of ionizing irradiation. The integrated spectral area and spectrum shape serves for comparison of the scintillator signals ascribed to different impinging particles when luminescence responses are exploited for spectral shape discrimination, using the hybrid sensor in fluxmetry/particle identification regime. The intermediate layer (3) of heavily-doped large-conductivity semiconductor layer serves as a rejection filter preventing secondary excitation of the high-purity semiconductor by luminescence light from optical spectral range. Additionally, the heavily-doped semiconductor layer can be employed for scans of short stopping range ionizing radiations which create extremely large fluences. Thicknesses of the top and intermediate layers (2), (3) are chosen to reduce the effects of multi-interference and penetration of intrusive radiations. The third element of the hybrid sensor (1), being the high-purity large-resistivity semiconductor homogeneous bulk-plate (4), serves for scanning of depth distribution of the parameters either of carrier recombination or trapping lifetime (in the dosimeter regime) or the secondary carrier pair density distribution when using the hybrid sensor in fluxmeter/particle species discrimination regime. The thickness of the high-purity semiconductor plate (4) is chosen according to the predicted penetration depth of the particles under inspection. The mentioned layers of the hybrid sensor (1) are routinely separated by dielectric/insulator layers such as sapphire (6) and silicon dioxide (5). Technologically, such a hybrid multi-layer sensor (1) can be fabricated as a single device by employing the technology of nitrides MOCVD growth on a silicon wafer substrate. In the latter case, the initial high-purity material substrate should be an initial layer (4) on top of which the large-conductivity material layer (3) is further formed by diffusion or implantation doping and, finally, scintillators (2) of AlGaN/GaN are grown by MOCVD technique, using the nm-thick AlGaN layers for insulating/nucleation purpose (**Fig. 2**).

The present hybrid multi-layer sensor (HMLS) has preferences relatively to Phoswich detectors:
- HMLS operates considerably faster, as it simultaneously records strong/intensive hits of the examined radiations, where reliable results can be obtained even from a single pulse of the reader measured during a millisecond-length record, while PSD/SSD discriminator should collect data over a day/hours to get a reliable record;
- As a consequence, HMLS can be applied for the control of the instantaneous state of irradiation;
- There is no physical limitation of the HMLS signal amplitude while saturation of PMT limits the density and energy of the impinging particles when using PSD/PSS discriminators - implemented as Phoswich detectors;
- Fabrication of HMLS detectors, either through binding of pieces of the wafer fragments of different materials separately grown, or manufactured as a single device by employing the technology of nitrides MOCVD growth on silicon, is compatible with the functional purpose of the HMLS layers.

The present hybrid sensor (HMLS) also has advantages over **Hybrid pixel (HPD) detectors:**
- HMLS enables avoiding of the intricate and expensive technological procedures in the formation of HPD;
- HMLS enables contactless reading of the detector responses;
- HMLS is a significantly cheaper device relatively HPD.
- HMLS does not require an external voltage source (power supply) for its operation;
- HMLS has more signatures (the simultaneously measured stopping range or pair density distribution profile together with fluence dependent structure of luminescence spectrum or relative spectrum integrated areas ascribed to different species of incident particles) in discrimination of incident particle species.

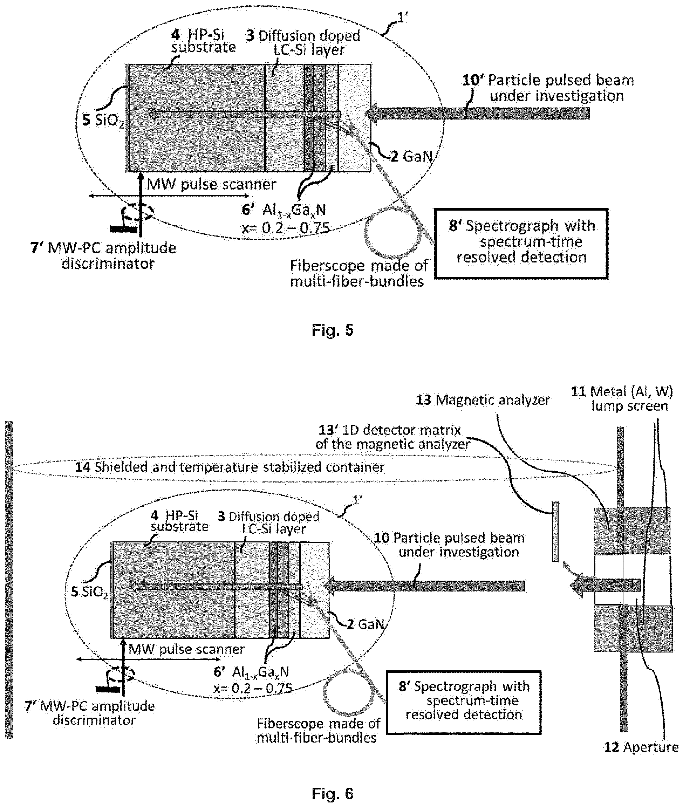

The HMLS reading is performed using a contactless mode by simultaneous measurements of the spectral-temporal components of either the UV laser (in the dosimetry mode) induced luminescence of the irradiated HS scintillator layer (collected into spectrophotometer using multi-bundle-fiberscope **Fig. 3**) or impinging particle radiation-induced luminescence spectrum structure (when applying the fluxmeter/particle species discrimination mode, as presented in **Fig. 4** and **Fig. 5**) and depth scans of carrier recombination (under hadron irradiations) or trapping (under gamma and electron irradiations) lifetimes (when implementing dosimetry regime) or carrier pair density depth distribution profiles (when applying particle species discrimination mode) within a high-purity material layer by recording microwave-probed photoconductivity responses. The depth scans of carrier lifetime are performed by using variations of the microwave signals recorded by a needle-tip edge-probe when the infra-red laser light (filtered by the large conductivity HS layer) pulses are employed for photo-conductivity excitation. The impinging particle radiation is exploited as the photo-conductivity excitation source when particle species discrimination regime is employed. There, the laser pulse excited and calibrated carrier pair density measurements are combined with the de microwave response amplitude records when a permanent particle beam hits the HMLS. In the case of pulsed particle bunch irradiations, the microwave responses are recorded similarly like using laser pulse excitation.

The application scheme of HMLS reading and operation in the dosimetry mode is provided in **Fig. 3**.

The application schemes of HMLS readers for the particle species discrimination are illustrated in **Fig. 4**, **Fig. 5**, and **Fig. 6**.

To increase the reliability of particle species detection, the entrance (aperture) of the reader should be shielded by the rather thick lumps of metals (for instance, up to 10 cm thick Al or tungsten), as presented in **Fig. 6**. To separate the charge states of the impinging particles, a magnetic analyser can also be incorporated within HMLS particle species discriminator.

To increase the reliability of particle species detection, the entrance (aperture) of the reader should be shielded by the rather thick lumps of metals (for instance, up to 10 cm thick Al or tungsten), as presented in **Fig. 6**. To separate the charge states of the impinging particles, a magnetic analyser can also be incorporated within HMLS particle species discriminator.

**Principles of evaluation of fluence and flux of irradiations as well as for the discrimination of the impinging particles, within the range of high doses and particle energy.**

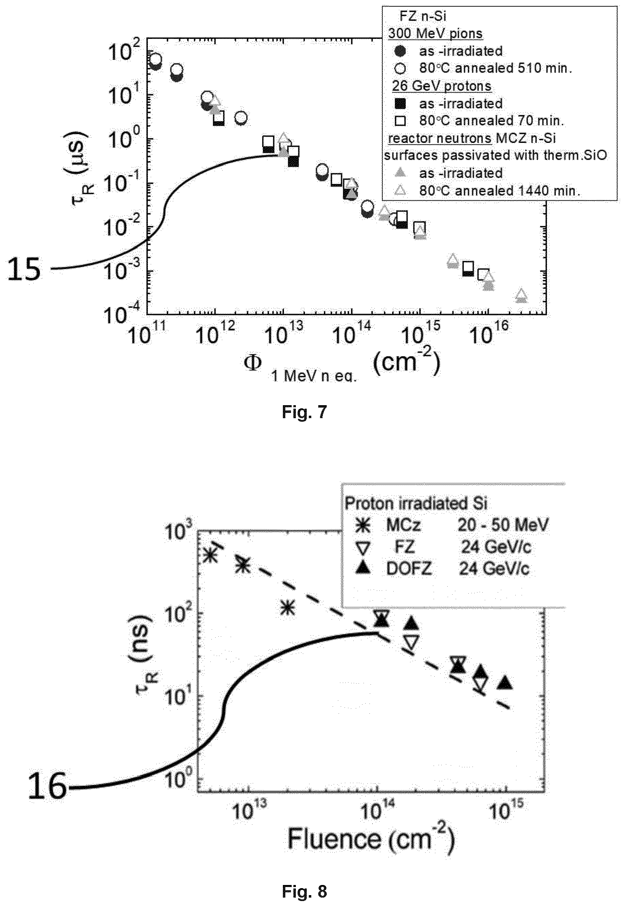

**The dose of large fluence hadron** irradiation introduces a rather high density of extended radiation defects which concentration is proportional to the collected fluence. It is known that all the elementary hadrons, such as neutrons, protons, and pions, with the energy of > 10 MeV introduce the single type of radiation defects that modify the carrier lifetime being a reciprocal hyperbolic function (15) of hadron fluence (**Fig. 7**), irrespective of incident hadron species and growth technology (Cz, MCZ, FZ) of high-purity Si wafer pieces with thermal oxygen passivated surfaces. Actually, the single exponential decay transients are routinely recorded in the as-irradiated high-purity Si materials, due to the prevailing of the recombination process.

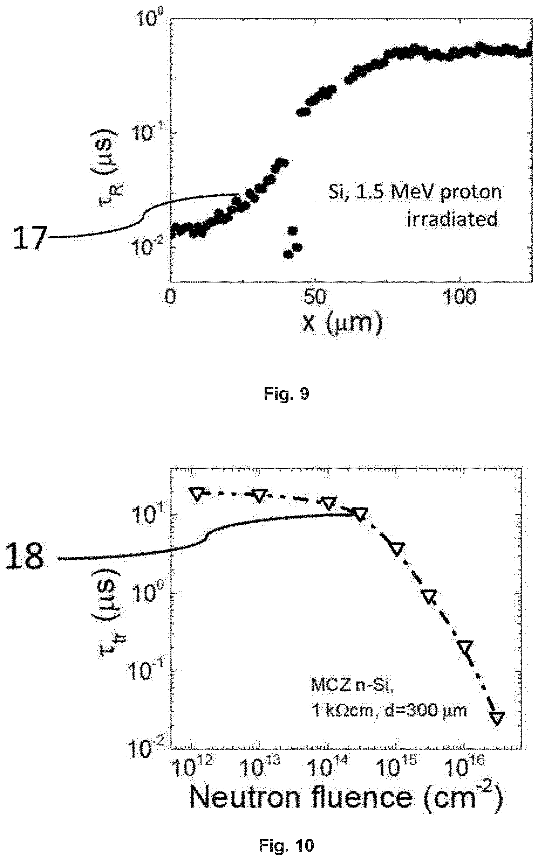

**Necessity of depth-scans of parameter distribution.** The recombination lifetime slightly depends on irradiation particle energy (16) as illustrated in **Fig. 8****.** To elevate the precision of particle identification and flux/fluence measurements, the depth-scanning of either carrier lifetime or MW signal amplitude/conductivity (σ-MW) distribution is anticipated within HS readers. The profile of carrier recombination lifetime (17), as illustrated in **Fig. 9**, enables evaluation of the incident particle stopping range, when by comparing it with a SRIM simulated profile, the energy of impinging radiation is determined.

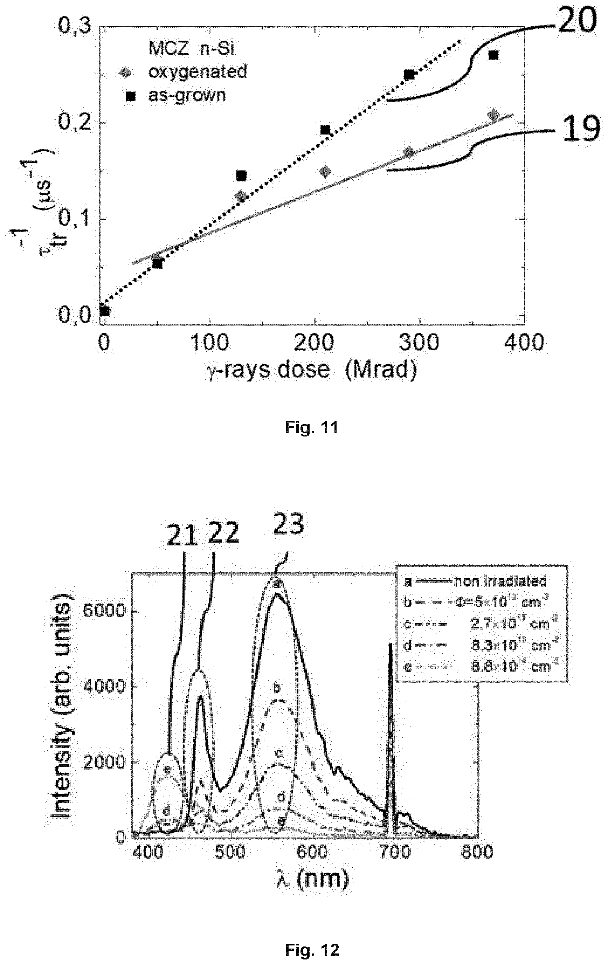

**Evaluation of radiation damage by electrons and gamma/X- rays can be estimated using trapping lifetime characteristics.** The trapping centres are usually ascribed to point radiation defects. The latter can be highlighted by measurements of the asymptotic component of carrier decay transients observed in rate with γ-rays dose, as illustrated in **Fig. 11**. Reciprocal trapping lifetime exhibits saturation in the range of the highest doses. This effect is inherent only for n-type HP-Si, while in the MCZ p-Si the nearly invariant rate of recombination and trapping defects is observed. The high-energy electron irradiations also cause the introduction of point defects. The trapping lifetime temperature variations are routinely related to different point defects, well-known in DLTS data sheets. Therefore, the effects of trapping lifetime variations should be well-known for the definite HP-Si material, employed for HMLS fabrication.

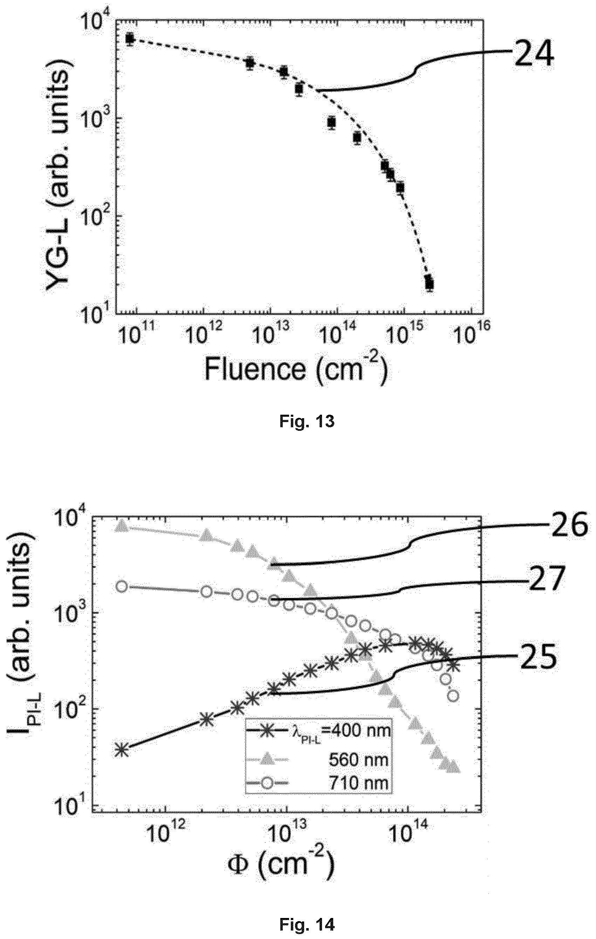

The luminescence spectra of the GaN scintillator depend on the fluence of the hadron irradiations (**Fig. 12**), and this dependence, ascribed to different spectral ranges, can be employed for dosimetry of heavily absorbed particles (alpha - particles, low energy protons, and neutrons). The dose-dependent luminescence intensity variations, ascribed to different spectral bands (21-23), as a function of irradiation fluence serve as the calibration curves (**Fig. 13**, **Fig. 14**) for fluence evaluation.

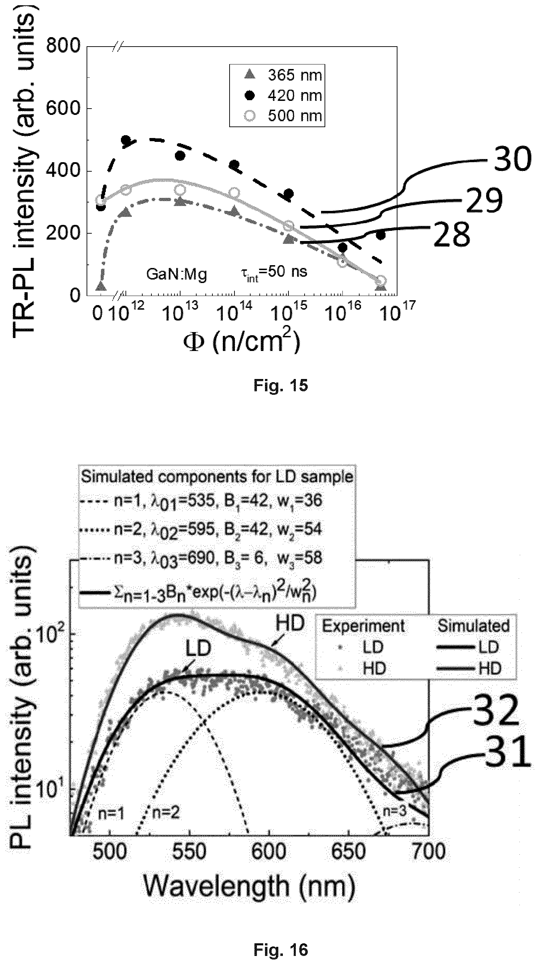

The luminescence spectra and transients of the GaN scintillator also depend on the irradiation fluence of the heavily stopped particles within the thin GaN scintillator (**Fig. 15**).

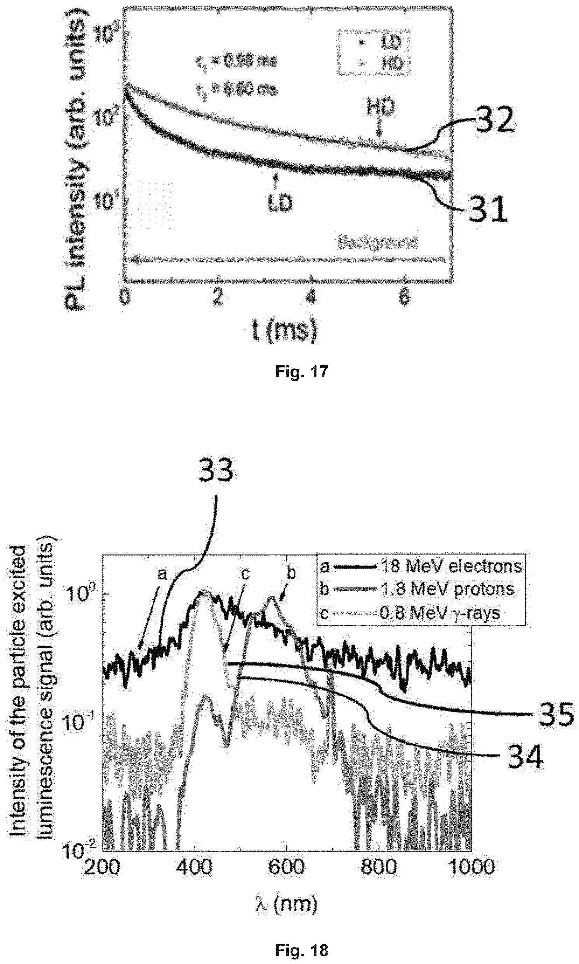

The temporal evolution of luminescence (L) signals by employing the Streak-Camera (SC) technique is commonly applied for calibration of the L-transients (at carrier pair concentrations nearby 10¹⁸ cm⁻³) when using a pulsed UV light for reading either of irradiation fluence or particle flux. The SC recordable L- signals in the GaN layer usually are obtained within the green-yellow-red (G-Y-R) L spectral range (**Fig. 16**). These L-spectra, obtained at fixed UV energy density per 200 fs pulse (**Fig. 16**) represent the asymmetric L-band in the range of 450-700 nm wavelengths. The nearly monotonous single-peak (at 530 nm) band is inherent for an SC spectrum recorded on LD (31) sample, while two-peaks (at 535 and 595 nm) can be resolved for HD (32) samples. Therefore, the doping level of the GaN scintillator should be carefully chosen in order to fabricate a reliable front scintillator. The Gaussian-shape components peaked at different wavelengths and having different relative peak-amplitudes (*B*) as well as bandwidths (*w*) can be employed to fit the recorded spectrum. The TR-L transients, obtained by integrating the whole recorded spectral range, are illustrated in **Fig. 17**. These TR-L transients cover a rather wide time domain, up to ten milliseconds (ms). These transients imply that measurements of the TR-L responses can be applied for pulse (transient) shape discrimination and identification of incident particles at high irradiation fluxes and fluences.

The TR-L spectra recorded on the Al₁₋ₓGaₓN and GaN scintillators (**Fig. 18**) can be applied for either L-decay transient or time-integrated spectral shape discrimination as well as for analysis of the spectrum integrated area in order to determine the components of the incident mixed spectral range radiation.

### NON-PATENT LITERATURE

**1** Seiichi Yamamoto and Jun Hatazawa. Development of an alpha/beta/gamma detector for radiation monitoring, Review of Scientific Instruments 82, 113503 (2011); https://doi.org/10.1063/1.3658821.
**2** Andreas Förster, et al. Transforming X-ray detection with hybrid photon counting detectors, Published 2019 Medicine, Physics Philosophical transactions. Series A, Mathematical, physical, and engineering sciences, https://doi.ora/10.1098/rsta.2018.0241.
**3** A. Rahimi et al. Radiation-Hard Optical Hybrid Board for the ATLAS Pixel Detector, International Journal of Modern Physics A Vol. 20, No. 16 (30 June 2005) 3805-3807, https://doi.org/10.1142/S0217751X05027679.
**4.** J. H. Jungmann-Smith et al. Radiation hardness assessment of the charge-integrating hybrid pixel detector JUNGFRAU 1.0 for photon science. Review of Scientific Instruments 86, 123110 (2015); https://dx.doi.org/10.1063/1.4938166

## Claims

1. A hybrid multi-layer sensor for measurement of the fluence of incident high-energy radiation and for identification of the particle species of the radiation,
**characterized in that** the sensor (1) comprises at least
- a first top layer (2) as a scintillator layer wherein spectral and temporal variations of scintillations are dependent on the fluence of the incident radiation and on the particle species of the radiation,
- a second layer (4) as a depth-scan layer (4) for depth scans of carrier lifetime dependent on fluence or radiation-induced secondary carrier-pair-dependent parameters, related to the particle species and energy,
- an intermediate layer (3) as a spectral filter preventing excitation of the depth-scan layer (4) by the luminescence generated in the scintillator layer (2),
wherein the scintillator layer (2) and depth-scan layer (4) are separately scanned by at least two external apparatuses:
a fiber-coupled spectrophotometer and a microwave needle-tip antenna connected to a microwave detection system, respectively, where particle species and particle energy discrimination is performed by correlating signals of a scintillator spectrum structure obtained via the scintillator layer (2) and of a microwave-probed photoconductivity amplitude and lifetime obtained via the depth-scan layer (4), and where the scintillator layer (2) and depth-scan layer (4) act as complementary detectors for the incident radiation.

2. The sensor according to claim 1, **characterized in that**
- thickness of the scintillator layer (2) is adjusted to fit the luminescence self-absorption depth;
- thickness of the depth-scan layer (4) is adjusted to fit the penetration depth of the infrared spectral component or of the most penetrative incident irradiation particles; and
- thickness of the intermediate layer (3) is adjusted to reject the visible spectrum components of the luminescence generated by the scintillator layer (2).

3. The sensor according to claims 1 and 2, **characterized in that**:
- the scintillator layer (2) comprises a wide band-gap semiconductor, preferably, GaN or AlGaN,
- the depth-scan layer (4) comprises a narrow band-gap, high-purity and large-resistivity semiconductor layer, preferably, high-purity silicon, and
- the intermediate layer (3) is a large-conductivity semiconductor layer, preferably, heavily-doped silicon.

4. The sensor according to claims 1 to 3, **characterized in that** the aforementioned three layers (2), (3) and (4) are separated by dielectric and/or insulator layers, such as sapphire and silicon dioxide.

5. The sensor according to claims 1 to 4, **characterized in that** its layered structure is formed as a single device wherein
- the depth-scan layer (4) is a high-purity and large-resistivity semiconductor wafer fragment (4) which serves as a substrate, onto which
- the intermediate layer (3) is formed as the large-conductivity-semiconductor layer by diffusion of dopants, and
- the scintillator layer (2) is further grown on top of said intermediate layer (3) by means of metal-organic chemical vapour deposition MOCVD technology.

6. The sensor according to any of claims 1 to 5, **characterized in that** the scintillator layer (2), grown onto the intermediate layer (3), is formed by up to four nucleation and accommodation nanometer-thick sub-layers, formed as hetero-junction alloy materials of varied composition (6'), preferably, of Al₁₋ₓGaₓN with x=0.2÷0.75, wherein said sub-layers act as additional time- and spectrum-resolving discriminators of the incident irradiation particle species.

7. The sensor according to claims 1 to 6, **characterized in that** it is applicable for identification of high-energy irradiation comprising any of gamma-rays, X-rays, alpha-particles, beta-particles, neutrons, electrons, pions, positrons, protons.

8. A method of high-energy irradiation dosimetry, using the hybrid sensor (1) according to claims 1 to 7, the method **characterized by** the steps of:
- exposing the sensor with high-energy radiation having a fluence Φ during an exposure period, and subsequently,
- simultaneously recording the scintillator (2) and depth-scan layer (4) signals, wherein
o time-integrated-spectroscopy of the scintillator's (2) luminescence, induced by a dosimetry reader's multi-color pulsed laser (9), is performed,
o and microwave-probed photoconductivity transients are scanned to extract fluence-dependent carrier lifetime depth-profiles within the depth-scan layer (4),
- particle species, energy and fluence of the incident irradiation, measured by the sensor (1), are evaluated by the combined analysis of the measured carrier lifetime profiles and luminescence intensity calibration characteristics.

9. The dosimetry method according to claim 8, **characterized in that** calibrated lifetime-fluence and photoluminescence (PL) spectral band intensity versus fluence characteristics are employed to extract the irradiation fluence (Φ) and/or dose (D) values.

10. A method of particle species discrimination using the hybrid sensor (1) according to claims 1 to 7, the method **characterized by** the steps of:
- irradiating the hybrid sensor (1) with the particle beam (10) having a flux ***F***
- whereby during the irradiation simultaneously recording signals of the scintillator (2) and depth-scan layer (4), wherein
∘ time-resolved spectroscopy of the scintillator's (2) luminescence, induced by the particle beam with flux ***F***, is performed, to determine the luminescence intensity ascribed to different spectral bands and, thereby, to discriminate between species of the beam and their penetration depths,
∘ and microwave-probed photo-conductivity amplitudes are scanned to extract the particle species and flux-dependent secondary carrier-pair density depth-profiles within depth-scan layer (4), to reveal the parameters of highly-penetrative incident particle species, energy and current flux,
- evaluating the particle species by combined analysis of measured microwave conductivity profiles and luminescence intensity calibration characteristics.

11. The particle species discrimination method according to claim 10, **characterized in that**
- for discriminating particle species in a permanent particle beam with flux ***F***, the measured signals obtained via the depth-scan layer (4) represent the microwave conductivity profiles,
- for discriminating particles in a pulsed and mixed particle beam with flux ***F***, the measured signals are recorded from the scintillator (2) and the depth-scan (4) layers and the measured microwave conductivity profiles are extracted from microwave peak-amplitude profiles.

12. The particle discrimination method according to claim 10, **characterized in that** calibrated microwave-probed *σ*-flux profile and photoluminescence (PL) spectral structure versus flux of particle species characteristics are employed, to extract the particle flux (F) and incident particle species (*Sᵢ*).

13. A measurement system for discriminating between particle species of a pulsed and mixed particle beam, comprising the hybrid sensor (1) according to claims 1 to 7, **characterized in that** for precision and reliability of discrimination between particle species and/or measuring their parameters *in situ* during irradiation, the measurement system further comprises, at least:
- a radiation-screening container (11), housing said sensor (1), and further comprising:
∘ a shielded beam entrance aperture (12),
∘ a magnetic analyser (13), arranged to separate particles by their charge-state, wherein a more precise discrimination between particle species of the pulsed and mixed particle beam with flux F is achieved:
- means (14) for stabilizing an operation temperature of the sensor (1).

14. The system according to claim 13, **characterized in that** it further comprises any of the following measurement devices:
• microwave-probed-photoconductivity *τ*-meter;
• microwave-probed-photoconductivity amplitude discriminator;
• dc-microwave conductivity scanner or microwave pulsed scanner;
• additional Infrared Pulse (IR) source;
• fiberscope with multiple-fibers;
• spectrophotometer;
• microwave dc-amplitude discriminator or array of microwave dc-amplitude discriminators;
• spectrograph with spectrum-time resolved detection;
• digital signal processing equipment.

## Patentansprüche

1. Hybrider Mehrschichtsensor zur Messung der Fluenz von einfallender hochenergetischer Strahlung und zur Identifizierung der Teilchenart der Strahlung, **dadurch gekennzeichnet, dass** der Sensor (1) mindestens Folgendes umfasst:
- eine erste Deckschicht (2) als Szintillatorschicht, wobei die spektralen und zeitlichen Variationen der Szintillationen von der Fluenz der einfallenden Strahlung und von der Teilchenart der Strahlung abhängig sind,
- eine zweite Schicht (4) als Tiefenabtastschicht (4) für Tiefenabtastungen der Ladungsträgerlebensdauer in Abhängigkeit von der Fluenz oder von strahlungsinduzierten sekundären ladungsträgerpaarabhängigen Parametern, bezogen auf die Teilchenart und die Energie,
- eine Zwischenschicht (3) als Spektralfilter, der die Anregung der Tiefenabtastschicht (4) durch die in der Szintillatorschicht (2) erzeugte Lumineszenz verhindert,
wobei die Szintillatorschicht (2) und die Tiefenabtastschicht (4) getrennt durch mindestens zwei externe Geräte abgetastet werden: ein fasergekoppeltes Spektralphotometer bzw. eine Mikrowellennadelspitzenantenne, die mit einem Mikrowellendetektionssystem verbunden ist, wobei
die Unterscheidung von Teilchenart und Teilchenenergie durch die Korrelation von Signalen einer Szintillatorspektrumsstruktur, die über die Szintillatorschicht (2) gewonnen werden, und einer Amplitude und Lebensdauer einer durch Mikrowellen erfasste Photoleitfähigkeit, die über die Tiefenabtastschicht (4) gewonnen werden, durchgeführt wird,
und wobei die Szintillatorschicht (2) und die Tiefenabtastschicht (4) als komplementäre Detektoren für die einfallende Strahlung wirken.

2. Sensor nach Anspruch 1, **dadurch gekennzeichnet, dass**
- die Dicke der Szintillatorschicht (2) an die Selbstabsorptionstiefe der Lumineszenz angepasst wird;
- die Dicke der Tiefenabtastschicht (4) so eingestellt wird, dass sie der Eindringtiefe der infraroten Spektralanteile oder der am stärksten eindringenden einfallenden Strahlungsteilchen entspricht; und
- die Dicke der Zwischenschicht (3) so eingestellt wird, dass die sichtbaren Spektralanteile der von der Szintillatorschicht (2) erzeugten Lumineszenz zurückgewiesen werden.

3. Sensor nach Anspruch 1 und 2, **dadurch gekennzeichnet, dass:**
- die Szintillatorschicht (2) einen Halbleiter mit breiter Bandlücke, vorzugsweise GaN oder AlGaN, umfasst,
- die Tiefenabtastschicht (4) eine Halbleiterschicht mit schmaler Bandlücke, hoher Reinheit und hohem spezifischen Widerstand, vorzugsweise hochreines Silizium, umfasst und
- die Zwischenschicht (3) eine Halbleiterschicht mit hoher Leitfähigkeit, vorzugsweise stark dotiertes Silizium, ist.

4. Sensor nach einem der Ansprüche 1 bis 3, **dadurch gekennzeichnet, dass** die drei vorgenannten Schichten (2), (3) und (4) durch dielektrische und/oder isolierende Schichten, wie Saphir und Siliziumdioxid, getrennt sind.

5. Sensor nach einem der Ansprüche 1 bis 4, **dadurch gekennzeichnet, dass** sein schichtweiser Aufbau als eine einzige Vorrichtung ausgebildet ist, wobei
- die Tiefenabtastschicht (4) ein als Substrat dienendes Halbleiterscheibenfragment (4) mit hoher Reinheit und hohem spezifischen Widerstand ist, auf der
- die Zwischenschicht (3) als Halbleiterschicht mit hoher Leitfähigkeit durch Diffusion von Dotierstoffen gebildet wird, und
- die Szintillatorschicht (2) auf der Zwischenschicht (3) mittels metallorganischer chemischer Gasphasenabscheidung (*metal-organic chemical vapour deposition* - MOCVD) gebildet wird.

6. Sensor nach einem der Ansprüche 1 bis 5, **dadurch gekennzeichnet, dass** die Szintillatorschicht (2), die auf der Zwischenschicht (3) gebildet wird, aus bis zu vier Nukleierungs- und Aufnahmeteilschichten, die nanometerdick sind, besteht, die als Heteroübergangslegierungsmaterialien unterschiedlicher Zusammensetzung (6'), vorzugsweise aus Al₁₋ₓGaₓN mit x=0,20÷0,75, gebildet werden, wobei die Teilschichten als zusätzliche zeit- und spektralauflösende Diskriminatoren der einfallenden Strahlungsteilchenarten wirken.

7. Sensor nach einem der Ansprüche 1 bis 6, **dadurch gekennzeichnet, dass** er für die Identifizierung von hochenergetischer Strahlung geeignet ist, die Gammastrahlen, Röntgenstrahlen, Alpha-Teilchen, Beta-Teilchen, Neutronen, Elektronen, Pionen, Positronen und Protonen umfasst.

8. Verfahren zur Dosimetrie hochenergetischer Strahlung unter Verwendung des hybriden Sensors (1) nach einem der Ansprüche 1 bis 7, wobei das Verfahren durch die folgenden Schritte **gekennzeichnet** ist
- Bestrahlen des Sensors mit hochenergetischer Strahlung mit einer Fluenz Φ während einer Bestrahlungszeit und anschließendes
- gleichzeitiges Aufzeichnen der Signale des Szintillators (2) und der Tiefenabtastschicht (4), wobei
o zeitintegrierte Spektroskopie der Lumineszenz des Szintillators (2), die durch den gepulsten Mehrfarbenlaser eines Dosimetrielesegeräts (9) induziert wird, durchgeführt wird,
o und durch Mikrowellen erfasste Photoleitfähigkeitstransienten abgetastet werden, um fluenzabhängige Ladungsträgerlebensdauertiefenprofile innerhalb der Tiefenabtastschicht (4) zu extrahieren,
- Teilchenart, Energie und Fluenz der einfallenden Strahlung, die vom Sensor (1) gemessen werden, durch die kombinierte Analyse der gemessenen Ladungsträgerlebensdauerprofile und der Lumineszenzintensitätskalibrierungskennlinien bewertet werden.

9. Dosimetrieverfahren nach Anspruch 8, **dadurch gekennzeichnet, dass** kalibrierte Lebensdauer-/Fluenz- und Photolumineszenz(PL)-Spektralbandintensität-/Fluenzkennlinien verwendet werden, um die Bestrahlungsfluenz(Φ)- und/oder Dosis(D)-Werte zu extrahieren.

10. Verfahren zur Unterscheidung von Teilchenarten unter Verwendung des hybriden Sensors (1) nach einem der Ansprüche 1 bis 7, wobei das Verfahren durch die folgenden Schritte **gekennzeichnet** ist
- Bestrahlung des hybriden Sensors (1) mit dem Teilchenstrahl (10), der einen Fluss ***F*** aufweist
- wobei während der Bestrahlung gleichzeitig Signale des Szintillators (2) und der Tiefenabtastschicht (4) aufgezeichnet werden, wobei
o eine zeitaufgelöste Spektroskopie der Lumineszenz des Szintillators (2), die durch den Teilchenstrahl mit dem Fluss ***F*** induziert wird, durchgeführt wird, um die Lumineszenzintensität zu bestimmen, die den verschiedenen Spektralbändern zugeordnet ist, und dadurch zwischen den Teilchenarten des Strahls und ihren Eindringtiefen zu unterscheiden,
o und die durch Mikrowellen erfasste Photoleitfähigkeitsamplituden abgetastet werden, um die teilchenart- und flussabhängigen sekundären Ladungsträgerpaardichtentiefenprofile innerhalb der Tiefenabtastschicht (4) zu extrahieren, um die Parameter der hochpenetrierenden einfallenden Teilchenarten, der Energie und des Stromflusses zu ermitteln,
- Bewerten der Teilchenarten durch kombinierte Analyse der gemessenen Mikrowellenleitfähigkeitsprofile und der Lumineszenzintensitätskalibrierungskennlinien.

11. Verfahren zur Unterscheidung von Teilchenarten nach Anspruch 10, **dadurch gekennzeichnet, dass**
- zur Unterscheidung von Teilchenarten in einem permanenten Teilchenstrahl mit dem Fluss ***F*** die Messsignale, die über die Tiefenabtastschicht (4) gewonnen werden, die Mikrowellenleitfähigkeitsprofile darstellen,
- zur Unterscheidung von Teilchen in einem gepulsten und gemischten Teilchenstrahl mit Fluss ***F*** die gemessenen Signale von der Szintillator- (2) und der Tiefenabtastschicht (4) aufgezeichnet werden, und die gemessenen Mikrowellenleitfähigkeitsprofile aus Mikrowellenspitzenwert-/- Amplitudenprofilen extrahiert werden.

12. Verfahren zur Unterscheidung von Teilchen nach Anspruch 10, **dadurch gekennzeichnet, dass** das kalibrierte durch Mikrowellen erfasste σ-Flussprofil und die Photolumineszenz(PL)-Spektralstruktur-/Fluss der Teilchenartkennlinien verwendet werden, um den Teilchenfluss (F) und die einfallende Teilchenart (*Sᵢ*) zu extrahieren.

13. Messsystem zur Unterscheidung zwischen Teilchenarten eines gepulsten und gemischten Teilchenstrahls, das den hybriden Sensor (1) nach einem der Ansprüche 1 bis 7 umfasst, **dadurch gekennzeichnet, dass** das Messsystem zur Präzision und Zuverlässigkeit der Unterscheidung zwischen Teilchenart und/oder zur Messung ihrer Parameter *in situ* während der Bestrahlung weiterhin mindestens umfasst:
- einen Strahlungsabschirmungsbehälter (11), in dem der Sensor (1) untergebracht ist, und der ferner Folgendes umfasst:
o eine abgeschirmte Strahleintrittsöffnung (12),
o einen magnetischen Analysator (13), der so angeordnet ist, dass er die Teilchen nach ihrem Ladungszustand trennt, wodurch eine genauere Unterscheidung zwischen der Teilchenart des gepulsten und des gemischten Teilchenstrahls mit Fluss ***F*** erreicht wird:
- Mittel (14) zur Stabilisierung einer Betriebstemperatur des Sensors (1).

14. System nach Anspruch 13, **dadurch gekennzeichnet, dass** es außerdem eines der folgenden Messgeräte umfasst:
• τ-Messgerät für durch Mikrowellen erfasste Photoleitfähigkeit;
• Amplitudendiskriminator für durch Mikrowellen erfasste Photoleitfähigkeit;
• Gleichstrommikrowellenleitfähigkeitsscanner oder gepulster Mikrowellenscanner;
• zusätzliche Infrarot(IR)-Pulsquelle;
• Fiberskop mit Mehrfachfasern;
• Spektralphotometer;
• Mikrowellengleichstromamplitudendiskriminator oder Array von Mikrowellengleichstromamplitudendiskriminatoren;
• Spektrographen mit spektral-/zeitaufgelöster Detektion;
• digitale Signalverarbeitungsgeräte.

## Revendications

1. Capteur multicouche hybride pour la mesure de la fluence d'un rayonnement incident à haute énergie et pour l'identification des espèces de particules du rayonnement, **caractérisé en ce que** le capteur (1) comprend au moins
- une première couche supérieure (2) en tant que couche de scintillateur dans lequel des variations spectrales et temporelles de scintillations dépendent de la fluence du rayonnement incident et des espèces de particules du rayonnement,
- une seconde couche (4) en tant que couche de balayage en profondeur (4) pour des balayages en profondeur de la durée de vie de porteurs dépendant de la fluence ou de paramètres dépendant de la paire de porteurs secondaires induits par le rayonnement, liés aux espèces et à l'énergie de particules,
- une couche intermédiaire (3) en tant que filtre spectral empêchant l'excitation de la couche de balayage en profondeur (4) par la luminescence générée dans la couche de scintillateur (2),
dans lequel la couche de scintillateur (2) et la couche de balayage en profondeur (4) sont balayées séparément par au moins deux appareils externes : un spectrophotomètre à couplage de fibres et une antenne de pointe d'aiguille à micro-ondes connectée à un système de détection à micro-ondes, respectivement, où la discrimination d'espèces de particules et d'énergie de particules est effectuée en corrélant des signaux d'une structure spectrale de scintillateur obtenue via la couche de scintillateur (2) et d'une amplitude et durée de vie de photoconductivité sondée par micro-ondes obtenues via la couche de balayage en profondeur (4),
et où la couche de scintillateur (2) et la couche de balayage en profondeur (4) agissent comme des détecteurs complémentaires pour le rayonnement incident.

2. Capteur selon la revendication 1, **caractérisé en ce que**
- l'épaisseur de la couche de scintillateur (2) est réglée pour s'adapter à la profondeur d'auto-absorption de luminescence ;
- l'épaisseur de la couche de balayage en profondeur (4) est réglée pour s'adapter à la profondeur de pénétration de la composante spectrale infrarouge ou des particules d'irradiation incidentes les plus pénétrantes ; et
- l'épaisseur de la couche intermédiaire (3) est réglée pour rejeter les composantes spectrales visibles de la luminescence générée par la couche de scintillateur (2).

3. Capteur selon les revendications 1 et 2, **caractérisé en ce que** :
- la couche de scintillateur (2) comprend un semi-conducteur à large bande interdite, de préférence, GaN ou AiGaN,
- la couche de balayage en profondeur (4) comprend une couche semi-conductrice à bande interdite étroite, de haute pureté et de grande résistivité, de préférence du silicium de haute pureté, et
- la couche intermédiaire (3) est une couche semi-conductrice à grande conductivité, de préférence du silicium fortement dopé.

4. Capteur selon les revendications 1 à 3, **caractérisé en ce que** les trois couches (2), (3) et (4) précitées sont séparées par des couches diélectriques et/ou isolantes, telles que le saphir et le dioxyde de silicium.

5. Capteur selon les revendications 1 à 4, **caractérisé en ce que** sa structure en couches est réalisée sous la forme d'un dispositif unique dans lequel
- la couche de balayage en profondeur (4) est un fragment de plaquette semi-conductrice de haute pureté et de grande résistivité (4) qui sert de substrat, sur lequel
- la couche intermédiaire (3) est formée en tant que couche semi-conductrice à grande conductivité par diffusion de dopants, et
- la couche de scintillateur (2) est en outre développée au-dessus de ladite couche intermédiaire (3) au moyen de la technologie de dépôt chimique en phase vapeur d'organométallique, MOCVD.

6. Capteur selon l'une quelconque des revendications 1 à 5, **caractérisé en ce que** la couche de scintillateur (2), développée sur la couche intermédiaire (3), est formée d'au plus quatre sous-couches de nucléation et d'hébergement d'épaisseur nanométrique, formées comme matériaux d'alliage à hétérojonction de composition variée (6'), de préférence, de Al₁₋ₓGaₓN avec x=0,2÷0,75, dans lequel lesdites sous-couches agissent comme des discriminateurs supplémentaires de résolution temporelle et spectrale des espèces de particules d'irradiation incidentes.

7. Capteur selon les revendications 1 à 6, **caractérisé en ce qu'**il est applicable pour l'identification d'une irradiation à haute énergie comprenant l'un quelconque des rayons gamma, rayons X, particules alpha, particules bêta, neutrons, électrons, pions, positrons, protons.

8. Procédé de dosimétrie d'irradiation à haute énergie, à l'aide du capteur hybride (1) selon les revendications 1 à 7, procédé étant **caractérisé par** les étapes
- d'exposition du capteur à un rayonnement à haute énergie ayant une fluence Φ pendant une durée d'exposition, et ensuite,
- d'enregistrement simultané des signaux du scintillateur (2) et de la couche de balayage en profondeur (4), dans lequel
o une spectroscopie intégrée dans le temps de la luminescence du scintillateur (2), induite par le laser pulsé multicolore d'un lecteur de dosimétrie (9), est réalisée,
o et les transitoires de photoconductivité sondés par micro-ondes sont balayés pour extraire des profils de profondeur de durée de vie de porteurs dépendant de la fluence à l'intérieur de la couche de balayage en profondeur (4),
- les espèces de particules, l'énergie et la fluence de l'irradiation incidente, mesurées par le capteur (1), sont évaluées par l'analyse combinée des profils de durée de vie de porteurs mesurés et des caractéristiques d'étalonnage d'intensité de luminescence.

9. Procédé de dosimétrie selon la revendication 8, **caractérisé en ce que** l'intensité de bande spectrale de durée de vie-fluence et photoluminescence (PL) étalonnée par rapport aux caractéristiques de fluence est utilisée pour extraire les valeurs de fluence d'irradiation (Φ) et/ou de dose (D).

10. Procédé de discrimination d'espèces de particules à l'aide du capteur hybride (1) selon les revendications 1 à 7, le procédé étant **caractérisé par** les étapes :
- d'irradiation du capteur hybride (1) avec le faisceau de particules (10) ayant un flux ***F***
- moyennant quoi, pendant l'irradiation, enregistrement simultané de signaux du scintillateur (2) et de la couche de balayage en profondeur (4), dans lequel
o une spectroscopie à résolution temporelle de la luminescence du scintillateur (2), induite par le faisceau de particules avec le flux ***F***, est effectuée, pour déterminer l'intensité de luminescence attribuée aux différentes bandes spectrales et, ainsi, pour discriminer les espèces de particules du faisceau et leurs profondeurs de pénétration,
o et des amplitudes de photoconductivité sondées par micro-ondes sont balayées pour extraire les espèces de particules et les profils de profondeur de densité de paire de porteurs secondaires dépendant du flux à l'intérieur de la couche de balayage en profondeur (4),
pour révéler les paramètres des espèces de particules incidentes fortement pénétrantes, l'énergie et le flux de courant,
- d'évaluation des espèces de particules par une analyse combinée des profils de conductivité micro-onde mesurés et des caractéristiques d'étalonnage d'intensité de luminescence.

11. Procédé de discrimination d'espèces de particules selon la revendication 10, **caractérisé en ce que**
- pour discriminer des espèces de particules dans un faisceau de particules permanent avec un flux ***F***, les signaux mesurés obtenus via la couche de balayage en profondeur (4) représentent les profils de conductivité micro-onde,
- pour discriminer des particules dans un faisceau de particules pulsé et mixte avec un flux ***F***, les signaux mesurés sont enregistrés à partir des couches de scintillateur (2) et de balayage en profondeur (4) et les profils de conductivité micro-onde mesurés sont extraits des profils d'amplitude de crête micro-onde.

12. Procédé de discrimination de particules selon la revendication 10, **caractérisé en ce que** le profil de flux σ sondé par micro-ondes étalonné et la structure spectrale de photoluminescence (PL) par rapport au flux de caractéristiques d'espèces de particules sont utilisés, pour extraire le flux de particules (*F*) et les espèces de particules incidentes. (*Sᵢ)*.

13. Système de mesure pour discriminer des espèces de particules d'un faisceau de particules pulsé et mixte, comprenant le capteur hybride (1) selon les revendications 1 à 7, **caractérisé en ce que** pour la précision et la fiabilité de la discrimination entre des espèces de particules et/ou la mesure de leurs paramètres *in situ* pendant l'irradiation, le système de mesure comprend en outre, au moins :
- un récipient de protection contre les rayonnements (11), logeant ledit capteur (1), et comprenant en outre :
o une ouverture d'entrée de faisceau protégée (12),
o un analyseur magnétique (13), agencé pour séparer des particules par leur état de charge, dans lequel une discrimination plus précise entre des espèces de particules du faisceau de particules pulsé et mixte avec le flux ***F*** est obtenue,
- un moyen (14) pour stabiliser une température de fonctionnement du capteur (1).

14. Système selon la revendication 13, **caractérisé en ce qu'**il comprend en outre l'un quelconque des dispositifs de mesure suivants :
• *τ*-mètre à photoconductivité sondée par micro-ondes ;
• discriminateur d'amplitude de photoconductivité sondée par micro-ondes ;
• scanner de conductivité micro-onde cc ou scanner pulsé micro-onde ;
• source d'impulsion infrarouge (IR) supplémentaire ;
• fibroscope multi-fibres ;
• spectrophotomètre ;
• discriminateur d'amplitude cc micro-onde ou réseau de discriminateurs d'amplitude cc micro-onde ;
• spectrographe avec détection à résolution spectrale-temporelle;
• équipements de traitement de signal numérique.
